# DEMANDE DE BREVET EUROPEEN

(11) **EP 0 844 136 A1**
(43) Date de publication de la demande: **27.05.1998**
(21) Numéro de dépôt: 97402156.0
(22) Date de dépôt: 17.09.1997
(51) Int. Cl.: B60Q 1/30

(54) **Aileron pour véhicules**

(30) Priorité: 26.11.1996 IT TO960238 U
(71) Demandeur: Groppo, Matteo, 12048 Sommariva Bosco (Cuneo) (IT)
(72) Inventeur: Groppo, Matteo, 12048 Sommariva Bosco (Cuneo) (IT)
(74) Mandataire: Armengaud Ainé, Alain

(57) **Abrégé**

Aileron aérodynamique ou « spoiler » devant être monté sur la partie postérieure d'un véhicule, caractérisé en ce qu'il comporte, à proximité de chacune de ses extrémités, un logement pour des organes latéraux respectifs de signalisation lumineuse (4), reliés à l'installation électrique du véhicule et pouvant être actionnés pour réaliser au moins l'une des fonctions suivantes : feux postérieurs de position, feux postérieurs antibrouillard, indicateurs de freinage, indicateurs de marche arrière, indicateurs de changement de direction.

## Description

La présente invention se réfère aux accessoires pour véhicules, et notamment elle se réfère à un aileron aérodynamique (aussi dénommé « spoiler ») adapté à être monté sur la partie postérieure du véhicule.

Dans beaucoup de voitures, surtout avec des prestations sportives, il est connu de monter, sur la partie postérieure, dans une position en élévation par rapport au sol, (par exemple sur le couvercle du coffre), un aileron qui influence les caractéristiques aérodynamiques de la voiture. On a même mis dans le commerce des ailerons dans lesquels un indicateur lumineux de freinage est monté en position centrale.

Selon l'invention, on apporte un aileron aérodynamique devant être monté sur la partie postérieure d'un véhicule, tel que notamment une voiture, caractérisé en ce qu'il comporte à proximité de chacune de ses extrémités, des sièges pour le montage d'organes de signalisation lumineuse, qui sont reliés à l'installation électrique du véhicule et qui peuvent être actionnés pour réaliser au moins une des fonctions suivantes : feux de position postérieurs, feux postérieurs antibrouillard, indicateurs de marche arrière, indicateurs de changement de direction, indicateurs de freinage.

Etant donné que l'aileron se trouve à une hauteur par rapport au sol plus grande que celle où se trouvent en général les dispositifs postérieurs de signalisation lumineuse conventionnels des véhicules destinés à être équipés du même aileron, on comprend immédiatement que, dans le cas de véhicules roulant en file, la signalisation fournie par les dispositifs montés sur l'aileron peut être reconnue non seulement par un véhicule qui suit immédiatement, mais aussi par des véhicules plus éloignés dans la même file : cela contribue à augmenter la sécurité de la circulation.

Pour plus de clarté on se réfère aux dessins annexés qui illustrent l'invention de façon non limitative et sur lesquels :
- les figures 1 et 2 sont des vues d'une première forme de réalisation de l'invention, et
- la figure 3 est une vue analogue à la figure 1 de cette invention.

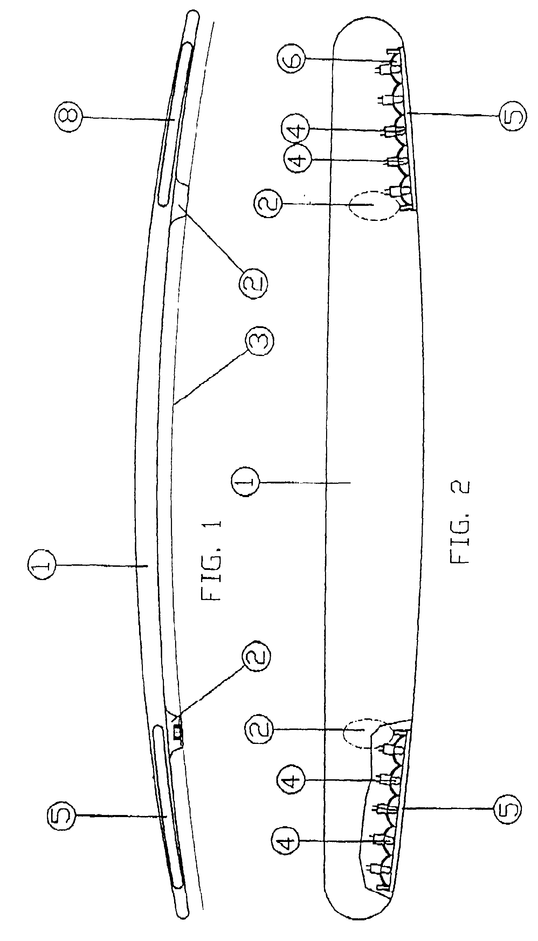

Comme on le voit sur les figures 1 et 2, l'aileron comporte, comme d'habitude, un corps allongé 1 profilé de façon à s'adapter au type spécifique de véhicule et pourvu d'appendices 2 pour le fixer sur la partie postérieure du véhicule, par exemple sur le couvercle du coffre, dont le profil est indiqué par la référence 3.

Aux extrémités latérales de l'aileron 1, à l'intérieur de celui-ci, on a prévu des logements pour deux groupes d'indicateurs lumineux 4, reliés à l'installation électrique du véhicule de façon à réaliser une ou plusieurs des fonctions suivantes : feux postérieurs de position, feux postérieurs antibrouillard, indicateurs de marche arrière, de freinage, de changement de direction. Les fils de l'alimentation électrique, non représentés, peuvent passer par exemple à travers les appendices de fixation 2.

Le nombre des indicateurs 4 dans chaque groupe dépendra du type et du nombre de fonctions à réaliser, et également du type de voiture et de l'effet esthétique qu'on veut donner à l'aileron 1. Pour associer chaque indicateur à ces fonctions, il faudra aussi considérer les normes législatives éventuelles.

Les logements des indicateurs 4 sont fermés par des éléments de couverture 5, de façon semblable aux sièges des indicateurs lumineux, qui ont la même fonction, montés conventionnellement sur la voiture. Des éléments de soutien 6 de chaque indicateur 4 sont solidaires de ces éléments.

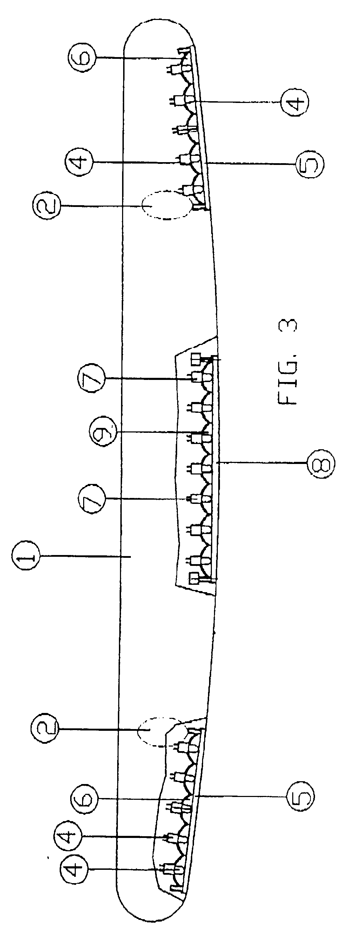

Dans la variante représentée dans la figure 3, l'aileron 1 comporte, en plus des indicateurs latéraux 4, un groupe complémentaire d'indicateurs lumineux 7, destinés à fonctionner comme indicateurs de freinage et/ou de marche arrière du véhicule et/ou comme feux antibrouillard.

En général, les indicateurs centraux réaliseront des fonctions qui ne sont pas présentes dans les indicateurs latéraux. Les indicateurs 7 sont montés de façon tout à fait semblable aux indicateurs 4, dans un logement fermé par une couverture 8 qui porte les moyens de fixation 9 de chaque indicateur.

Il est évident que la description qui précède n'est donnée qu'à titre d'exemple non limitatif et que des variantes et modifications sont possibles sans sortir du domaine de l'invention tel que défini dans les revendications annexées.

## Revendications

1. Aileron aérodynamique ou « spoiler » devant être monté sur la partie postérieure d'un véhicule, caractérisé en ce qu'il comporte, à proximité de chacune de ses extrémités, un logement pour des organes latéraux respectifs de signalisation lumineuse (4), reliés à l'installation électrique du véhicule et pouvant être actionnés pour réaliser au moins l'une des fonctions suivantes : feux postérieurs de position, feux postérieurs antibrouillard, indicateurs de freinage, indicateurs de marche arrière, indicateurs de changement de direction.

2. Aileron selon la revendication 1, caractérisé en ce qu'il comporte, en outre, en position centrale, un logement dans lequel on a disposé des organes complémentaires de signalisation lumineuse (7), qui peuvent être actionnés pour réaliser au moins l'une des fonctions suivantes : indicateurs de freinage, indicateurs de marche arrière, feux postérieurs antibrouillard.
